# EUROPÄISCHE PATENTSCHRIFT

(11) **EP 4 494 441 B1**
(45) Veröffentlichungstag und Bekanntmachung des Hinweises auf die Patenterteilung: **20.05.2026**
(21) Anmeldenummer: 24178514.6
(22) Anmeldetag: 28.05.2024
(51) Int. Cl.: A01D 43/08

(54) **FELDHÄCKSLER**
FORAGE HARVESTER
RÉCOLTEUSE-HACHEUSE

(30) Priorität: 12.07.2023 DE 102023118412
(43) Veröffentlichungstag der Anmeldung: 22.01.2025
(73) Patentinhaber: CLAAS Selbstfahrende Erntemaschinen GmbH, 33428 Harsewinkel (DE)
(72) Erfinder: Neitemeier, Dennis, 59510 Lippetal (DE); Belau, Sven Carsten, 33332 Gütersloh (DE); Bönig, Ingo, 33330 Gütersloh (DE); Brune, Markus, 33428 Harsewinkel (DE); Klein-Helmkamp, Marwin, 49565 Bramsche (DE); Cord-Kruse, Christian, 48231 Warendorf (DE)
(74) Vertreter: CLAAS Gruppe

(56) Entgegenhaltungen:
- EP-A1- 1 839 478
- EP-A1- 3 925 429
- DE-A1- 102019 112 965

## Beschreibung

Die Erfindung betrifft einen Feldhäcksler gemäß dem Oberbegriff des Anspruchs 1.

Feldhäcksler umfassen eine Häckseleinrichtung, die eine Häckseltrommel mit daran angeordneten, länglichen Häckselmessern sowie eine ortsfeste Gegenschneide aufweist. Das der Häckseltrommel zugeführte Erntegut wird durch das Zusammenwirken zwischen den Häckselmessern und der Gegenschneide gehäckselt, also zerkleinert.

Aus der DE 10 2017 103 537 und der DE 10 2019 112 965 ist eine Sensoranordnung bekannt geworden, die mittels induktiver Sensoren die umlaufenden Messer einer Häckseltrommelanordnung detektiert und aus dem ermittelten magnetischen Fluss einen Verschleißzustand der Häckselmesser ableitet, wobei sich der Verschleiß aus der jeweils induzierten Spannung ergibt.

Neben den Häckselmessern unterliegen auch die Trommellager der Häckseltrommel im Erntebetrieb besonders hohen Belastungen. Die hohen Drehzahlen der Häckseltrommel sowie die im Häckselbetrieb auf die Trommellager wirkenden Kräfte können zu einem Verschleiß der Trommellager und einem damit einhergehenden Lagerspiel der Häckseltrommel führen. Mit zunehmenden Lagerspiel steigt die Gefahr eines defekten Trommellagers. Defekte Trommellager können im laufenden Betrieb des Feldhäckslers zu erheblichen Schäden an der Häckseltrommel und der gesamten Maschine führen. Der Bediener des Feldhäcksler hat keine Informationen über das Lagerspiel der Trommellager und kann nicht abschätzen, wann diese zu tauschen sind.

Es ist deshalb Aufgabe der Erfindung, die beschriebenen Nachteile des Standes der Technik zu vermeiden und insbesondere einen Feldhäcksler zu schaffen, der eine Ermittlung des Verschleißzustands der Trommellager der Häckseltrommel ermöglicht.

Diese Aufgabe wird erfindungsgemäß durch die kennzeichnenden Merkmale des Anspruchs 1 gelöst. Vorteilhafte Weiterbildungen sind Gegenstand der abhängigen Ansprüche.

Gemäß dem Anspruch 1 wird ein Feldhäcksler mit einem Erntevorsatz und mit einer Häckseleinrichtung vorgeschlagen, die Häckseleinrichtung umfassend eine Häckseltrommel und dieser zugeordneten Häckselmessern zum Zerkleinern von Erntegut, zumindest zwei Trommellager zur Lagerung der Häckseltrommel, ein die Häckseltrommel abschnittsweise umgebendes Trommelgehäuse, wobei das Trommelgehäuse schwenkbeweglich um die Häckseltrommel ist, und einer am Trommelgehäuse angeordneten Sensoranordnung, wobei zwischen der Sensoranordnung und der Häckseltrommel ein Luftspalt ausgebildet ist, wobei bei einer Drehung der Häckseltrommel zumindest ein Teil der Häckselmesser den Luftspalt passiert und in der Sensoranordnung ein Spannungssignal induziert, wobei der Feldhäcksler eine Auswerteinheit umfasst, die in signalübertragender Weise mit der Sensoranordnung verbunden ist, wobei die Auswerteinheit derart eingerichtet ist, sodass diese mittels des Spannungssignals ein Lagerspiel zumindest eines Trommellagers identifiziert. Die automatische Identifizierung bzw. Detektierung eines Lagerspiels des Trommellagers ermöglicht es rechtzeitig einem Bediener einen Hinweis über ein kritisches Lagerspiel zu geben, sodass dieser das Trommellager Tauschen kann, bevor dieses Defekt ist.

Zur Identifizierung des Lagerspiels kann die Auswerteinheit derart eingerichtet sein, dass diese eine Veränderung der Signalstärke des Spannungssignals in einem Messintervall identifiziert und mittels einer Änderung der Signalstärke das Lagerspiel ermittelt.

Eine vorteilhafte Weiterbildung sieht vor, dass die Veränderung der Signalstärke durch eine Veränderung eines Abstands zwischen der Häckseltrommel und der Sensoranordnung bedingt ist. Eine Veränderung des Abstands der Häckseltrommel zu der Sensoranordnung kann auf einfache Art und Weise mittes der Sensoranordnung ermittelt werden und ist auf ein Lagerspiel der Trommellager zurückzuführen.

Gemäß einer vorteilhaften Ausgestaltung kann das Messintervall eine Mehrzahl von Messpunkten der Sensoranordnung umfassen, wobei die Auswerteinheit zum Ermitteln einer Trendlinie aus der Mehrzahl von Messpunkten der Sensoranordnung vorgesehen und eingerichtet ist. Mittels der Trendlinie kann eine sich Verändernde Signalstärke des Spannungssignals auf besonders einfache Art und Weise ermittelt werden.

Eine weitere vorteilhafte Ausgestaltung sieht vor, dass das Messintervall ein bei einer Schwenkbewegung des Trommelgehäuses ermitteltes Spannungssignal umfasst. Vorzugsweise umfasst das Messintervall ausschließlich Messpunkte des Spannungssignals, die während einer Schwenkbewegung des Trommelgehäuses ermittelt wurden. Üblicherweise bleibt der Abstand der Sensoranordnung zu der Häckseltrommel bei einer Schwenkbewegung des Trommelgehäuses im Wesentlich unverändert. Im Falle eines Lagerspiels kann jedoch die Position der Häckseltrommel relativ zu dem Trommelgehäuse von der bestimmungsgemäßen Position der Häckseltrommel abweichen. In diesem Fall verändert sich auch der Abstand der Sensoranordnung zu der Häckseltrommel bei einer Schwenkbewegungen des Trommelgehäuses und somit auch die Signalstärke des Spannungssignals. Mithin ist bei einer Schwenkbewegungen des Trommelgehäuses ein Lagerspiel in besonders vorteilhafter Weise identifizierbar.

Eine vorteilhafte Weiterbildung sieht vor, dass eine Steigung der Trendlinie ermittelt wird, wobei die Steigung der Trendlinie eine Veränderung der Signalstärke des Spannungssignals während der Schwenkbewegung beschreibt. Mittels der Steigung kann eine Zu- oder Abnahme der Signalstärke des Spannungssignals identifiziert werden.

Besonders vorteilhaft ist es, wenn das Messintervall ein bei einem sich verändernden Erntegutstrom ermitteltes Spannungssignal umfasst. Der sich verändernde Erntegutstrom kann eine Verschiebung der Häckseltrommel bewirken, die auf ein Lagerspiel zurückzuführen ist. Mithin ist es besonders vorteilhaft, wenn das Messintervall eine Mehrzahl von Messpunkten des Spannungssignals umfasst, die während eines sich im Bereich der Häckseltrommel verändernden Erntegutstrom ermittelt wurden. Hierbei kann eine Steigung der Trendlinie ermittelt werden, wobei die Steigung der Trendlinie eine Veränderung der Signalstärke des Spannungssignals während des sich verändernden Erntegutstroms beschreibt.

Eine vorteilhafte Weiterbildung sieht vor, dass der Feldhäcksler eine Anzeigeeinheit umfasst, wobei einem Bediener in der Anzeigeeinheit eine Information zum Lagerspiel anzeigbar ist. Eine derartige Information kann einen kritischen Zustand der Trommellager umfassen, sodass der Bediener die Trommellager rechtzeitig vor einem vollständigen Defekt austauschen kann. Vorzugsweise ist die Anzeigeeinheit derart eingerichtet, sodass diese einen Verschleißzustand der Trommellager anzeigt.

Die vorliegende Erfindung wird nachstehend anhand eines in den Zeichnungen dargestellten Ausführungsbeispiels näher erläutert. Es zeigen:
- Figur 1: eine schematische Darstellung eines selbstfahrenden Feldhäckslers in Seitenansicht;
- Figur 2: eine Detailansicht des Feldhäckslers nach Figur 1 mit einer induktiven Sensoranordnung;
- Figur 3: eine Detailansicht der induktiven Sensoranordnung;
- Figur 4a: eine Häckseltrommel eines Feldhäckslers mit unterschiedlichen Stellungen des Trommelgehäuses;
- Figur 4b: eine Häckseltrommel eines Feldhäckslers mit unterschiedlichen Stellungen des Trommelgehäuses, wobei die Häckseltrommel infolge eines Lagerspiels gegenüber der Position gemäß Figur 4a verschoben ist;
- Figur 5: ein in einem Messintervall mittels der induktiven Sensoranordnung ermitteltes Spannungssignal;
- Figur 6: eine Häckseltrommel in zwei Stellungen, wobei die Häckseltrommel in der ersten Stellung in ihrer Ruheposition ist und in der zweiten Stellung im Häckselbetrieb durch einen Erntegutstrom nach oben gedrückt ist.

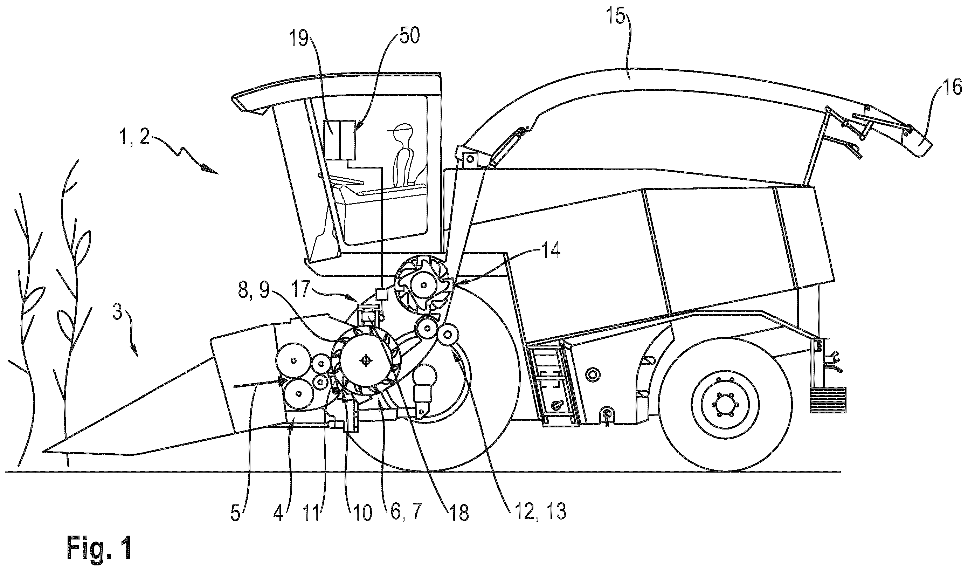

Figur 1 zeigt schematisch eine als Feldhäcksler 2 ausgeführte landwirtschaftliche Arbeitsmaschine 1, die in ihrem frontseitigen Bereich einen Erntevorsatz 3 aufnimmt. Im rückwärtigen Bereich des Erntevorsatzes 3 sind diesem sogenannte Einzugs- und Vorpresswalzen 4 zugeordnet, die den Erntegutstrom 5 aus dem Erntevorsatz 3 kommend annehmen, verdichten und in ihrem rückwärtigen Bereich an eine Häckseleinrichtung 6 übergeben. Die Häckseleinrichtung 6 umfasst eine Häckseltrommel 7, die mit Häckselmessern 8 einer Häckselmesseranordnung 9 bestückt ist. Die umlaufenden Häckselmesser 8 werden im Einzugsbereich 10 der Häckseltrommel 7 an einer sogenannten Gegenschneide 11, über die der zu zerkleinernde Erntegutstrom 5 gefördert wird, vorbeibewegt. Im rückwärtigen Bereich der Häckseltrommel 7 wird das zerkleinerte Erntegut 5 sodann entweder an eine als sogenannter Cracker 12 ausgeführte Nachzerkleinerungseinrichtung 13 oder direkt an eine Nachbeschleunigungseinrichtung 14 übergeben. Während die Nachzerkleinerungseinrichtung 13 die körnigen Bestandteile des Erntegutstromes 5, etwa Maiskörner, weiter zerkleinert beschleunigt der Nachbeschleuniger 14 den Erntegutstrom 5 in einer Weise, dass dieser durch einen Auswurfkrümmer 15 bewegt und endseitig im Bereich einer Auswurfklappe 16 aus dem Feldhäcksler 2 austreten und an ein nicht dargestelltes Transportfahrzeug übergeben werden kann. Zudem ist der Häckseltrommel 7 umfangseitig eine an sich bekannte und daher hier nicht im Detail beschriebene Messerschleifeinrichtung 17 zugeordnet, deren Schleifstein 18 horizontal über die Breite der Häckseltrommel 7 bewegbar ist, sodass jedes am Umfang der Häckseltrommel 7 positionierte Häckselmesser 8 schleifbar ist. Zwecks Aktivierung oder Deaktivierung des Messerschleifvorganges ist die Messerschleifeinrichtung 17 in signalübertragender Weise mit einer Steuereinrichtung 19 verbunden.

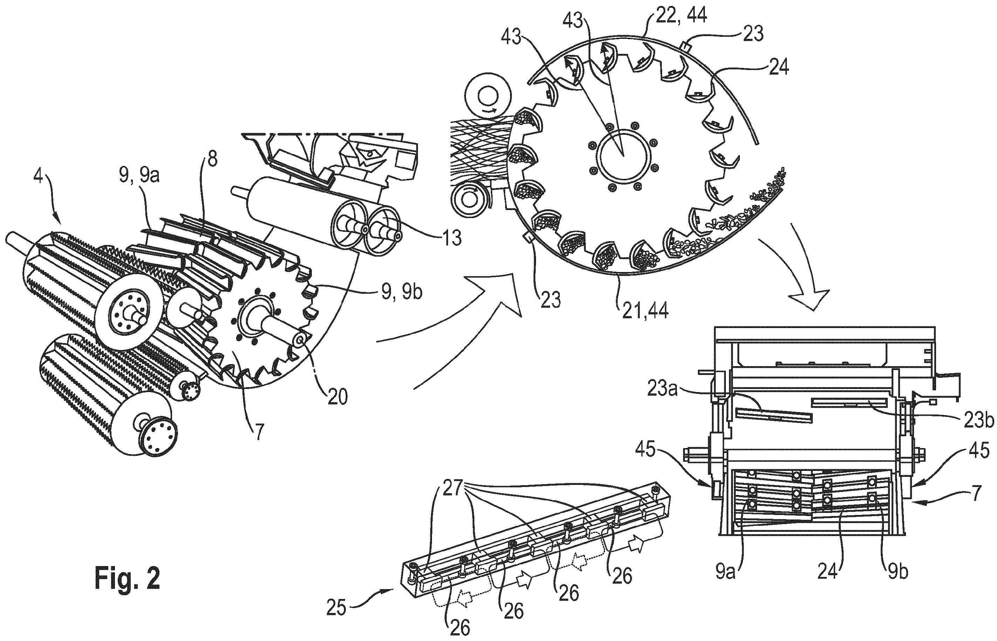

Gemäß Figur 2 umfasst die Häckselmesseranordnung 9 rechts- und linksseitige Häckselmesseranordnungen 9a, 9b, wobei jede Häckselmesseranordnung 9a, 9b eine Vielzahl am Umfang der Häckseltrommel 7 schräg zur Drehachse 20 der Häckseltrommel 7 positionierte Häckselmesser 8 umfasst. An den Stirnseiten der Häckseltrommel 7 ist in an sich bekannter Weise jeweils ein Trommellager 45 zur Lagerung der Häckseltrommel 7 angeordnet. Die Trommellager 45 können beispielsweise als Kugellager ausgeführt sein. Die Häckseltrommel 7 wird untenseitig von einem vorzugsweise aus Edelstahl bestehenden Trommelboden 21 ummantelt. Obenseitig wird die Häckseltrommel 7 von einer vorzugsweise ebenfalls aus Edelstahl bestehenden Trommelrückwand 22 umschlossen. Die Trommelrückwand 22 und der Trommelboden 21 bilden das Trommelgehäuse 44. Eine Sensoranordnung 23 kann gemäß dem in Figur 2 dargestellten Ausführungsbeispiel entweder an der Trommelrückwand 22 oder am Trommelboden 21 positioniert sein. Es ist auch denkbar, dass zugleich sowohl am Trommelboden 21 als auch an der Trommelrückwand 22 eine Sensoranordnung 23 angeordnet ist. Unabhängig von der konkreten Positionierung sind jeder Häckseltrommel 7 zumindest 2 Sensoranordnungen 23a, 23b in der Weise zugeordnet, dass jeweils eine der Sensoranordnungen 23a, 23b der jeweils zugehörigen Häckselmesseranordnung 9a, 9b zugeordnet ist, wobei jede Sensoranordnung 23a, 23b die Schneidkante 24 des jeweiligen Häckselmessers 7 vollständig überdeckt, sodass jede Schneidkante 24 über ihrer gesamten Länge durch die jeweilige Sensoranordnung 23a, 23b detektiert werden kann. Weiter liegt es im Rahmen der Erfindung, dass die jeweilige Sensoranordnung 23a, 23b entweder parallel zur Drehachse 20 der Häckseltrommel 7 oder parallel zur Schneidkante 24 der Häckselmesser 8 am Trommelboden 21 und/oder der Trommelrückwand 22 positioniert ist. Die rechte untere Darstellung in Figur 2 zeigt nur beispielhaft die möglichen Ausrichtungen der Sensoranordnungen 23a, 23b in einer einzigen Darstellung. Vorzugsweise werden alle Sensoranordnungen 23a, 23b entweder parallel zur Drehachse 20 der Häckseltrommel 7 oder parallel zur Schneidkante 24 der Häckselmesser 8 positioniert sein. Im dargestellten Ausführungsbeispiel sind die Sensoranordnungen 23a, 23b als Induktionssensoren 25 ausgeführt, wobei jede Sensoranordnung 23 ein oder mehrere magnetische Erregeranordnungen 26 sowie jeweils eine mit diesen zusammenwirkende Polanordnung 27 umfasst.

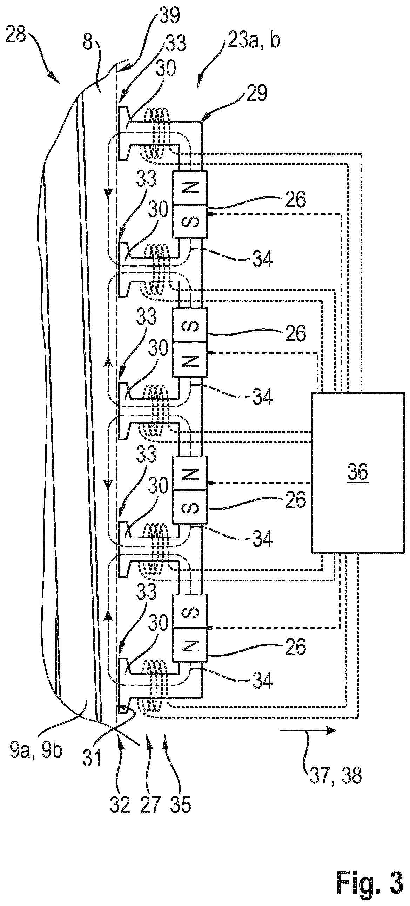

Figur 3 erläutert einige Eigenschaften der Sensoranordnungen 23a, 23b, wobei sich die weiteren Details zu den Sensoranordnungen aus der DE 10 2017 103 537 A1 ergeben, auf deren Offenbarungsgehalt hiermit vollumfänglich Bezug genommen wird. Eine Erfassungsanordnung 28 zur Erfassung eines Zustands, insbesondere Verschleißzustands, einer Häckselmesseranordnung 9a, 9b umfasst eine Vielzahl von Sensoranordnungen 23a, 23b, vorzugsweise für jede Häckselmesseranordnung 9a, 9b eine. Jede Sensoranordnung 23a, 23b wird von einer Vielzahl magnetischer Erregeranordnungen 26 gebildet, die mit einer Flussleiteinrichtung 29 gekoppelt sind. Die jeweilige Sensoranordnung 23a, 23b stellt jeweils eine Polanordnung 27 bereit, die mindestens einen magnetischen Pol 30, vorzugsweise fünf magnetische Pole 30, mit jeweils einer Polfläche 31 zum Ausleiten von Magnetfluss ausbildet. Bei einer Drehung der Häckseltrommel 7 passiert ein Häckselmesser 8 die jeweilige Polanordnung 27, wobei das die Polanordnung 27 jeweils passierende Häckselmesser 8 eine Luftspaltanordnung 32 mit mindestens einem Luftspalt 33 zu der Polanordnung 27 hin ausbildet und dadurch mindestens ein von der Erregeranordnung 26 erregter Magnetkreis 34 über das jeweilige Häckselmesser 8 geschlossen wird. Die Erfassungsanordnung 28 weist zudem eine Messanordnung 35 und eine Auswerteeinheit 36 auf. Die Messanordnung 35 erfasst mindestens eine magnetische Messgröße 37 betreffend den Magnetfluss, vorzugsweise eine induzierte Spannung 38, in mindestens einem von der Erregeranordnung 26 erregten Magnetkreis 34 und die Auswerteeinheit 36 ermittelt aus der mindestens einen erfassten Messgröße 37 den Verschleißzustand des jeweiligen Häckselmessers 8.

Im Betrieb der Häckseltrommel 7 werden die Häckselmesser 8 gemäß der Drehrichtung der Häckseltrommel 7 an der jeweiligen Sensoranordnung 23a, 23b vorbeigeführt. Aufgrund der nahezu unmagnetischen Eigenschaften der vorzugsweise aus Edelstahl bestehenden Trommelrückwand 22 oder des Trommelbodens 21 durchdringen die von benachbarten magnetischen Polen 30 gebildeten Magnetkreise 34 das jeweils die Sensoranordnung 23a, 23b überstreichende Häckselmesser 8. Im dargestellten Ausführungsbeispiel bilden sich zwischen den fünf Polen 30 vier Magnetkreise 34 aus, die das jeweilige Häckselmesser in vier Abschnitten durchdringen. Für jeden dieser Abschnitte wird in der diesem zugeordneten Messanordnung 35 eine Spannung 38, die magnetische Messgröße 37, induziert. Die der Erfassungsanordnung 28 zugeordnete Auswerteinheit 36 ermittelt jeweils die abschnittsweise Induktionsspannung 38 und zeichnet diese auf. In diesem Zusammenhang liegt es im Rahmen der Erfindung, dass die jeweilige Sensoranordnung 23 mehr oder weniger als die offenbarten fünf magnetischen Pole 30 aufweist, sodass sich auch mehr oder weniger als die fünf induzierten Spannungen 38 ergeben können. Es liegt auch im Rahmen der Erfindung, dass die Spannungssignale 38 zu einem oder mehreren Spannungssignalen 38 je detektiertem Häckselmesser 8 zusammengefasst werden können. Die weiteren Details zu der Erfassung der Spannungssignale 38 sind aus der DE 10 2019 112 965 A1 bekannt, auf deren Offenbarungsgehalt hiermit vollumfänglich Bezug genommen wird.

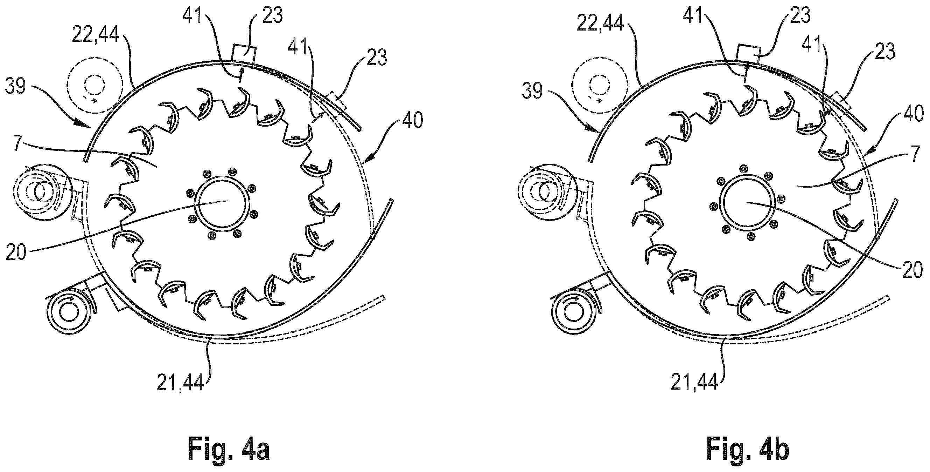

In Fig. 4a ist eine Häckseltrommel 7 dargestellt, die sich in ihrer bestimmungsgemäßen Position befindet bzw. nicht aufgrund eines Lagerspiels verschoben ist. Der Erntevorsatz 3 des Feldhäckslers 2 ist in an sich bekannter Weise in seiner Höhe verstellbar, um die Schnitthöhe an verschiedene Erntebedingungen anzupassen. Mit einer Verstellung der Höhe des Erntevorsatzes 3 wird zugleich in an sich bekannter Weise das Trommelgehäuse 44 verschwenkt, wobei die Drehachse 20 der Häckseltrommel 7 im Wesentlichen der Drehachse 20 der Schwenkbewegung des Trommelgehäuses 44 entspricht. Das Trommelgehäuse 44 mit der daran angeordneten Sensoranordnung 23 ist in Fig. 4a in einer ersten Position 39 und gestrichelt in einer zweiten Position 40 dargestellt. Dadurch, dass die Drehachse 20 der Häckseltrommel 7 zugleich der Drehachse 20 der Schwenkbewegung des Trommelgehäuses 44 entspricht, bleibt der Abstand 41 bei der Schwenkbewegungen des Trommelgehäuses 44 unverändert. Mithin bleibt die Signalstärke des in der Sensoranordnung 23 induzierten Spannungssignals 38 im Wesentlichen unverändert.

In Fig. 4b ist die Häckseltrommel 7 infolge eines Lagerspiels innerhalb des Trommelgehäuses 44 verschoben. Aufgrund dieser Verschiebung verändert sich bei einer Schwenkbewegung des Trommelgehäuses 44 der Abstand 41 der Sensoranordnung 23 zu der Häckseltrommel 7. Die Signalstärke des in der Sensoranordnung 23 induzierten Spannungssignals 38 hängt vom Abstand 41 der Häckseltrommel 7 zu der Sensoranordnung 23 ab. Mithin verändert sich die Signalstärke des Spannungssignals 38 bei der in Fig. 4b gezeigten Schwenkbewegung des Trommelgehäuses 44.

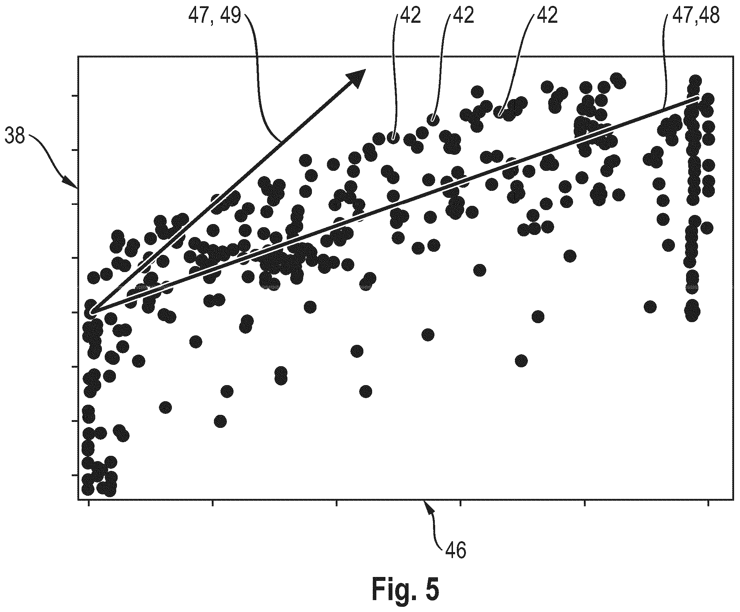

Fig. 5 zeigt mehrere Messpunkte 42 des Spannungssignal 38, die innerhalb eines Messintervalls 46 ermittelt wurden. Das in Fig. 5 gezeigte Messintervall 46 wurde während einer Schwenkbewegungen des Trommelgehäuses 44 ermittelt. Die Signalstärke nimmt innerhalb des Messintervall 46 zu. Dies ist durch einen sich während der Schwenkbewegung verändernden Abstands 41 der Sensoranordnung 23 zu der Häckseltrommel 7 bedingt. Zur Ermittlung einer sich verändernden Signalstärke, berechnet die Auswerteinheit 36 für die innerhalb des Messintervalls 46 ermittelten Messpunkte 42 eine Trendlinie 47. Weiterhin ist die Auswerteinheit 36 derart eingerichtet, sodass diese die Steigung der Trendlinie 47 ermittelt. Eine starke oder geringe Steigung der Trendlinie 47 bedeutet, dass sich die Signalstärke des Spannungssignals 38 innerhalb des Messintervalls 46 verändert hat und demgemäß auch eine Veränderung des Abstands 41 der Sensoranordnung 23 zu der Häckseltrommel 7 innerhalb des Messintervalls 46 erfolgt ist. Mithin identifiziert die Auswerteinheit 36 anhand der Steigung der Trendlinie 47, dass ein Lagerspiel an zumindest einem Trommellager 45 vorhanden ist. Beispielsweise kann hierfür eine Initialtrendlinie 48 in der Auswerteinheit 36 hinterlegt sein. Diese Initialtrendlinie 48 beschreibt eine Trendlinie 47 für ein Messintervall 46, wobei die Initialtrendlinie 48 im neuwertigen Zustand der Trommellager 45 bei einer Schwenkbewegungen des Trommelgehäuses 44 ermittelt wurde.

Im neuwertigen Zustand kann ebenfalls eine geringe Steigung der Trendlinie 47 bzw. Initialtrendlinie 48 vorhanden sein, wobei diese auf Einbau- und Herstelltoleranzen der Trommellager 45 zurückzuführen ist, sodass auch im neuwertigen Zustand der Trommellager 45 bei einer Schwenkbewegungen des Trommelgehäuses 44 eine geringfügige Änderung des Abstands 41 der Häckseltrommel 7 zu der Sensoranordnung 23 resultiert. Die Auswerteinheit 36 ist derart eingerichtet, sodass diese eine von der Initialtrendlinie 48 abweichende Trendlinie 49 identifiziert und einem Lagerspiel der Trommellager 45 zuordnet.

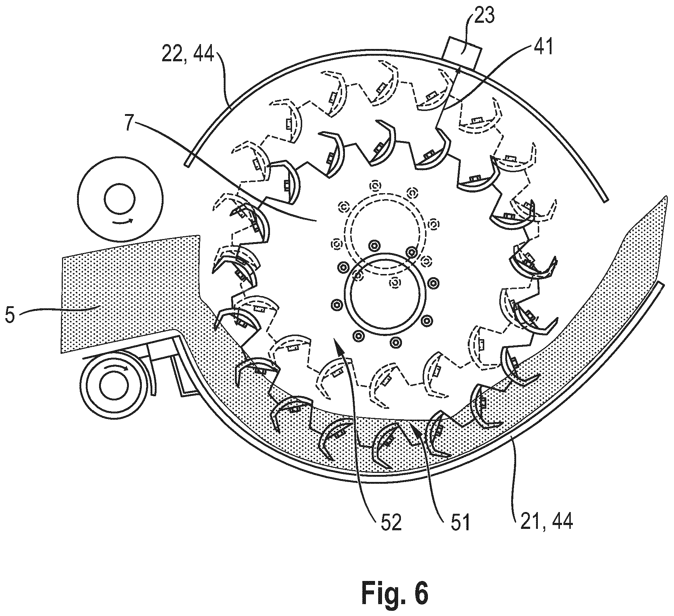

Fig. 6 zeigt eine Häckseltrommel 7, die ausgehend von einer ersten Position 51 hin zu einer zweiten Position 52 verschoben ist. Die Häckseltrommel 7 ist durch den Erntegutstrom 5 nach oben gedrückt. Eine derartige Veränderung der Position 51 der Häckseltrommel 7 ist auf ein Lagerspiel der Trommellager 45 zurückzuführen. Wie in der Fig. 6 dargestellt ist, verändert sich der Abstand 41 der Sensoranordnung 23 zu der Häckseltrommel 7 durch einen zunehmenden Erntegutstrom. Analog zu den vorangehenden Ausführungen verändert sich hierbei die Signalstärke des Spannungssignals 38 innerhalb eines Messintervalls 46, wobei das Messintervall 46 in diesem Fall Messpunkte 42 umfasst, die während eines sich verändernden Erntegutstroms 5 ermittelt wurden. Die Auswerteinheit ist analog zu den vorangehenden Ausführungen zur Identifizierung eines Lagerspiels der Trommellager 45 mittels der Steigung einer Trendlinie 47 innerhalb eines solchen Messintervalls 46 vorgesehen und eingerichtet.

Hier und vorzugsweise umfasst der Feldhäcksler 2 eine Anzeigeeinheit 40, wobei die Anzeigeeinheit 50 zum Anzeigen einer das Lagerspiel betreffenden Information vorgesehen und eingerichtet ist. Die Information kann z.B. eine Empfehlung zum Austauschen der Trommellager 45 aufgrund eines zu großen Lagerspiels umfassen.

**Bezugszeichenliste:**

| | | | |
|---|---|---|---|
| 1 | Landwirtschaftliche Arbeitsmaschine | 34 | Magnetkreis |
| 2 | Feldhäcksler | 35 | Messanordnung |
| 3 | Erntevorsatz | 36 | Auswerteinheit |
| 4 | Einzugs- und Vorpresswalzen | 37 | magnetische Messgröße |
| 5 | Erntegutstrom | 38 | Spannungssignal |
| 6 | Häckseleinrichtung | 39 | Erste Position |
| 7 | Häckseltrommel | 40 | Zweite Position |
| 8 | Häckselmesser | 41 | Abstand |
| 9 | Häckselmesseranordnung a... b | 42 | Messpunkt |
| 10 | Einzugsbereich | 43 | Radius |
| 11 | Gegenschneide | 44 | Trommelgehäuse |
| 12 | Cracker | 45 | Trommellager |
| 13 | Nachzerkleinerungseinrichtung | 46 | Messintervall |
| 14 | Nachbeschleunigungseinrichtung | 47 | Trendlinie |
| 15 | Auswurfkrümmer | 48 | Initialtrendlinie |
| 16 | Auswurfkrümmerklappe | 49 | Trendlinie |
| 17 | Messerschleifeinrichtung | 50 | Anzeigeeinheit |
| 18 | Schleifstein | 51 | Position |
| 19 | Steuereinrichtung | 52 | Position |
| 20 | Drehachse Häckseltrommel | | |
| 21 | Trommelboden | | |
| 22 | Trommelrückwand | | |
| 23 | Sensoranordnung a...b | | |
| 24 | Schneidkante | | |
| 25 | Induktionssensor | | |
| 26 | magnetische Erregeranordnung | | |
| 27 | Polanordnung | | |
| 28 | Erfassungsanordnung | | |
| 29 | Flussleiteinrichtung | | |
| 30 | magnetischer Pol | | |
| 31 | Polfläche | | |
| 32 | Luftspaltanordnung | | |
| 33 | Luftspalt | | |

## Patentansprüche

1. Feldhäcksler (2) mit einem Erntevorsatz (3) und mit einer Häckseleinrichtung (6) umfassend eine Häckseltrommel (7) und dieser zugeordneten Häckselmessern (8) zum Zerkleinern von Erntegut, zumindest zwei Trommellager (45) zur Lagerung der Häckseltrommel (7), ein die Häckseltrommel (7) abschnittsweise umgebendes Trommelgehäuse (44), wobei das Trommelgehäuse (44) schwenkbeweglich um die Häckseltrommel (7) ist,
und einer am Trommelgehäuse (44) angeordneten Sensoranordnung (23), wobei zwischen der Sensoranordnung (23) und der Häckseltrommel (7) ein Luftspalt (33) ausgebildet ist,
wobei bei einer Drehung der Häckseltrommel (7) zumindest ein Teil der Häckselmesser (8) den Luftspalt (33) passiert und in der Sensoranordnung (23) ein Spannungssignal (38) induziert,
wobei der Feldhäcksler (2) eine Auswerteinheit (36) umfasst, die in signalübertragender Weise mit der Sensoranordnung (23) verbunden ist,
wobei die Auswerteinheit (36) derart eingerichtet ist, sodass diese mittels des Spannungssignals (38) ein Lagerspiel zumindest eines Trommellagers (45) identifiziert.

2. Feldhäcksler (2) nach Anspruch 1, **dadurch gekennzeichnet, dass** die Auswerteinheit (36) derart eingerichtet ist, dass diese eine Veränderung der Signalstärke des Spannungssignals (38) in einem Messintervall (46) identifiziert und mittels einer Änderung der Signalstärke das Lagerspiel ermittelt.

3. Feldhäcksler (2) nach Anspruch 2, **dadurch gekennzeichnet, dass** die Veränderung der Signalstärke durch eine Veränderung eines Abstands (41) zwischen der Häckseltrommel (7) und der Sensoranordnung (23) bedingt ist.

4. Feldhäcksler (2) nach einem der Ansprüche 2 oder 3, **dadurch gekennzeichnet, dass** das Messintervall (46) eine Mehrzahl von Messpunkten (42) der Sensoranordnung (23) umfasst, wobei die Auswerteinheit (36) zum Ermitteln einer Trendlinie (47) aus der Mehrzahl von Messpunkten (42) der Sensoranordnung (23) vorgesehen und eingerichtet ist.

5. Feldhäcksler (2) nach einem der Ansprüche 2 bis 4, **dadurch gekennzeichnet, dass** das Messintervall (46) ein bei einer Schwenkbewegung des Trommelgehäuses (44) ermitteltes Spannungssignal (38) umfasst.

6. Feldhäcksler (2) nach den Ansprüchen 4 und 5, **dadurch gekennzeichnet, dass** eine Steigung der Trendlinie (47) ermittelt wird, wobei die Steigung der Trendlinie (47) eine Veränderung der Signalstärke des Spannungssignals (38) während der Schwenkbewegung beschreibt.

7. Feldhäcksler (2) nach einem der Ansprüche 2 bis 6, **dadurch gekennzeichnet, dass** das Messintervall (46) ein bei einem sich verändernden Erntegutstrom (5) ermitteltes Spannungssignal (38) umfasst.

8. Feldhäcksler (2) nach den Ansprüchen 4 und 7, **dadurch gekennzeichnet, dass** eine Steigung der Trendlinie (47) ermittelt wird, wobei die Steigung der Trendlinie (47) eine Veränderung der Signalstärke des Spannungssignals (38) während des sich verändernden Erntegutstroms (5) beschreibt.

9. Feldhäcksler (2) nach einem der Ansprüche 1 bis 8, **dadurch gekennzeichnet, dass** der Feldhäcksler (2) eine Anzeigeeinheit (50) umfasst, wobei einem Bediener in der Anzeigeeinheit (50) eine Information zum Lagerspiel anzeigbar ist.

## Claims

1. Forage harvester (2) having a harvesting attachment (3) and having a chopping device (6) comprising a chopping drum (7) and associated chopping knives (8) for shredding crops, at least two drum bearings (45) for storing the chopping drum (7), a drum housing (44) surrounding the chopping drum (7) in sections, wherein the drum housing (44) is pivotable about the chopping drum (7),
and a sensor arrangement (23) arranged on the drum housing (44), wherein an air gap (33) is formed between the sensor arrangement (23) and the chopping drum (7),
wherein rotation of the chopping drum (7) results in at least some of the chopping knives (8) passing through the air gap (33) and a voltage signal (38) being induced in the sensor arrangement (23),
wherein the forage harvester (2) comprises an evaluation unit (36) connected to the sensor arrangement (23) in a signal-transmitting manner,
wherein the evaluation unit (36) is configured in such a way that it uses the voltage signal (38) to identify a bearing clearance of at least one drum bearing (45).

2. Forage harvester (2) according to Claim 1, **characterized in that** the evaluation unit (36) is configured in such a way that it identifies a change in the signal strength of the voltage signal (38) in a measurement interval (46) and uses a change in the signal strength to ascertain the bearing clearance.

3. Forage harvester (2) according to Claim 2, **characterized in that** the change in the signal strength is caused by a change in a distance (41) between the chopping drum (7) and the sensor arrangement (23).

4. Forage harvester (2) according to either of Claims 2 and 3, **characterized in that** the measurement interval (46) comprises a plurality of measurement points (42) of the sensor arrangement (23), wherein the evaluation unit (36) is intended and configured to ascertain a trend line (47) from the plurality of measurement points (42) of the sensor arrangement (23).

5. Forage harvester (2) according to one of Claims 2 to 4, **characterized in that** the measurement interval (46) comprises a voltage signal (38) ascertained during a pivoting movement of the drum housing (44).

6. Forage harvester (2) according to Claims 4 and 5, **characterized in that** a gradient of the trend line (47) is ascertained, wherein the gradient of the trend line (47) describes a change in the signal strength of the voltage signal (38) during the pivoting movement.

7. Forage harvester (2) according to one of Claims 2 to 6, **characterized in that** the measurement interval (46) comprises a voltage signal (38) ascertained during a changing crop flow (5).

8. Forage harvester (2) according to Claims 4 and 7, **characterized in that** a gradient of the trend line (47) is ascertained, wherein the gradient of the trend line (47) describes a change in the signal strength of the voltage signal (38) during the changing crop flow (5).

9. Forage harvester (2) according to one of Claims 1 to 8, **characterized in that** the forage harvester (2) comprises a display unit (50), wherein information about the bearing clearance is able to be displayed to an operator in the display unit (50).

## Revendications

1. Récolteuse-hacheuse (2) dotée d'un organe de récolte frontal (3) et d'un dispositif de hachage (6) comportant un tambour hacheur (7) et des couteaux de hachage (8) associés à celui-ci et destinés à hacher des produits récoltés, au moins deux paliers de tambour (45) destinés à supporter le tambour hacheur (7), un carter de tambour (44) entourant le tambour hacheur (7) dans certaines parties, le carter de tambour (44) étant mobile en pivotement autour du tambour hacheur (7),
et d'un dispositif à capteur (23) placé sur le carter de tambour (44), un espace (33) étant formé entre le dispositif à capteur (23) et le tambour hacheur (7),
sachant que lors d'une rotation du tambour hacheur (7), au moins une partie des couteaux de hachage (8) passe devant l'espace (33) et induit un signal de tension (38) dans le dispositif à capteur (23),
la récolteuse-hacheuse (2) comprenant une unité d'évaluation (36) qui est reliée au dispositif à capteur (23) de manière à transmettre des signaux,
l'unité d'évaluation (36) étant conçue de manière à ce que celle-ci identifie, à l'aide du signal de tension (38), un jeu de palier d'au moins un palier de tambour (45).

2. Récolteuse-hacheuse (2) selon la revendication 1, **caractérisée en ce que** l'unité d'évaluation (36) est conçue de manière à ce que celle-ci identifie une variation de l'intensité de signal du signal de tension (38) dans un intervalle de mesure (46) et détermine le jeu de palier à l'aide d'une variation de l'intensité de signal.

3. Récolteuse-hacheuse (2) selon la revendication 2, **caractérisée en ce que** la variation de l'intensité de signal est due à une variation d'une distance (41) entre le tambour hacheur (7) et le dispositif à capteur (23).

4. Récolteuse-hacheuse (2) selon une des revendications 2 ou 3, **caractérisée en ce que** l'intervalle de mesure (46) comprend une pluralité de points de mesure (42) du dispositif à capteur (23), l'unité d'évaluation (36) étant prévue et conçue pour déterminer une ligne de tendance (47) à partir de la pluralité de points de mesure (42) du dispositif à capteur (23).

5. Récolteuse-hacheuse (2) selon une des revendications 2 à 4, **caractérisée en ce que** l'intervalle de mesure (46) comprend un signal de tension (38) déterminé lors d'un mouvement pivotant du carter de tambour (44).

6. Récolteuse-hacheuse (2) selon les revendications 4 et 5, **caractérisée en ce que** l'on détermine une pente de la ligne de tendance (47), la pente de la ligne de tendance (47) décrivant une variation de l'intensité de signal du signal de tension (38) pendant le mouvement pivotant.

7. Récolteuse-hacheuse (2) selon une des revendications 2 à 6, **caractérisée en ce que** l'intervalle de mesure (46) comprend un signal de tension (38) déterminé lors d'une variation d'un flux de récolte (5).

8. Récolteuse-hacheuse (2) selon les revendications 4 et 7, **caractérisée en ce que** l'on détermine une pente de la ligne de tendance (47), la pente de la ligne de tendance (47) décrivant une variation de l'intensité de signal du signal de tension (38) pendant la variation du flux de récolte (5).

9. Récolteuse-hacheuse (2) selon une des revendications 1 à 8, **caractérisée en ce que** la récolteuse-hacheuse (2) comprend une unité d'affichage (50), une information relative au jeu de palier pouvant être indiquée à un opérateur dans l'unité d'affichage (50).
